# EUROPEAN PATENT APPLICATION

(11) **EP 4 835 528 A1**
(43) Date of publication of application: **04.11.2026**
(21) Application number: 26206028.8
(22) Date of filing: 03.04.2022
(51) Int. Cl.: G02B 6/38, G02B 6/40

(54) **FERRULE HOLDER FOR MINIATURE MT FERRULE AND ADAPTER INTERFACE FOR MATING WITH FIBER OPTIC CONNECTORS**

(30) Priority: 02.04.2021 US 202163170092 P
(62) Document number(s) of the earlier application(s) in accordance with Art. 76 EPC: 22718493.4 / 4 314 917
(71) Applicant: US Conec, Ltd, Hickory, NC 28603-2306 (US)
(72) Inventor: HIGLEY, Jason, Hickory, 28601 (US); CHILDERS, Darrell R., Hickory, 28601 (US)
(74) Representative: Stoffregen, Hans-Herbert

(57) **Abstract**

A combination of a fiber optic ferrule and a fiber optic ferrule holder includes a fiber optic ferrule with a pair of guide pins movable between a non-mating position and a mating position via a spring mechanism. The fiber optic ferrule includes at least one cut-out with a ferrule stop surface associated therewith. The ferrule holder has a central opening in the body and two holder extensions extending longitudinally and forward of the fiber optic ferrule holder, each of the holder extensions include a rear stop surface configured to engage a respective ferrule stop surface on the fiber optic ferrule.

## Description

### Reference to Related Case

This application claims priority under 35 U.S.C. § 119 (e) to U.S. provisional application no. 63/170,092 filed on April 2, 2021, the contents of which are hereby incorporated by reference in their entirety.

### BACKGROUND OF THE INVENTION

The miniature MT ferrule was introduced by the Applicant in response to growing high density connector requirements per various high density standards being developed (e.g., QSFP-DD). The miniature MT ferrule was disclosed by the Applicant in the Application No. PCT/US21/28919 filed April 23, 2021, and is significantly smaller than the conventional MT ferrules used in the fiber optic connector industry. The fiber optic ferrules have dimensions of 1.25mm in height, 4mm in length, and a width of 6.4mm. Applicant has also disclosed a connector housing for this miniature MT ferrule in the Application No. PCT/US21/28925 filed April 23, 2021. Current high density format applications are directed to connecting two optical connectors in that format from each side of an adapter conforming to such a format or footprint. There is no arrangement currently available in the art that mates the miniature MT ferrule directly to a connector (with a housing having a mating miniature MT ferrule within it). An angled-polished end face on the miniature MT ferrule adds another level of complexity to this problem of mating with the fiber optic connector, as fiber polarity has to be taken into account too.

As on-board applications develop, Applicant has identified a need for directly mating one or more miniature MT ferrules to corresponding one or more fiber optic connectors having their own such respective miniature MT ferrules.

### SUMMARY OF THE INVENTION

According to one aspect, the present invention is directed to a combination of a fiber optic ferrule and a fiber optic ferrule holder comprising:
a fiber optic ferrule including a pair of guide pins movable between a non-mating position and a mating position via a spring mechanism, the fiber optic ferrule including a top cut-out on a top portion and a bottom cut-out on a bottom portion of the fiber optic ferrule, each of the top cut-out and the bottom cut-out having with a ferrule stop surface associated therewith;
a ferrule holder having a body with a first side, a second side opposite the first side, a top side, and a bottom side opposite the top side, a central opening in the body defined at least in part by the first side, the second side, the top side, and the bottom side; and
a first holder extension extending longitudinally and forward of the first side and a second holder extension extending longitudinally and forward of the second side, each of the first holder extension and the second holder extension including a rear stop surface configured to engage a respective ferrule stop surface on the fiber optic ferrule,
wherein the ferrule holder includes a fiber slot through which a plurality of optical fibers are disposed within the central opening, and
the slot extends longitudinally from a back end of the fiber optic ferrule holder to a front end of the central opening.

In some embodiments, a location of the slot is about where the first side meets with the top side.

In some embodiments, the slot is along the top side or the bottom side.

In some embodiments, the ferrule holder has a back end with rear facing surface functions as a rear push surface, the ferrule holder has a first and a second internal groove, the first internal groove is in the first side and has two walls that are perpendicular to the central opening, the second internal groove is on the second side and has one straight wall that is adjacent to the slot, and the second internal groove has a second slanted/angled wall being not perpendicular to the central opening and assisting in inserting the optical fibers into the central opening.

In some embodiments, the optical fibers making contact with the slanted wall, the optical fibers are riding up the slanted wall into the central opening of the ferrule holder forward the bottom side and not getting stubbed or stuck in the second internal groove.

In some embodiments, the plurality of optical fibers are in the form of an optical fiber ribbon.

In some embodiments, the guide pins move relative to the fiber optic ferrule during insertion and removal of the fiber optic ferrule from a receptacle.

In some embodiments, each of the first holder extension and the second holder extension further comprises a head portion having the rear stop surface, wherein the head portion of each the first holder extension and the second holder extension functions to align the fiber optic ferrule with a receptacle.

In some embodiments, when pulling on the fiber optic ferrule holder, the first and second holder extension move relative to the fiber optic ferrule and the rear facing stop surfaces engage the forward facing surfaces, pulling the fiber optic ferrule out of the receptable with the fiber optic ferrule holder.

In some embodiments, the guide pins move with the fiber optic ferrule holder.

In some embodiments, the ferrule holder has a first surface to push the fiber optic ferrule and a second surface to engage a forward facing surface to remove the fiber optic ferrule from the adapter.

According to one aspect, the present invention is directed to a combination of a fiber optic ferrule and a fiber optic ferrule holder that includes a fiber optic ferrule including a pair of guide pins movable between a non-mating position and a mating position via a spring mechanism, the fiber optic ferrule including a top cut-out on a top portion and a bottom cut-out on a bottom portion of the fiber optic ferrule, each of the top cut-out and the bottom cut-out having with a ferrule stop surface associated therewith, a ferrule holder having a body with a first side, a second side opposite the first side, a top side, and a bottom side opposite the top side, a central opening in the body defined at least in part by the first side, the second side, the top side, and the bottom side, and a first holder extension extending longitudinally and forward of the first side and a second holder extension extending longitudinally and forward of the second side, each of the first holder extension and the second holder extension including a rear stop surface configured to engage a respective ferrule stop surface on the fiber optic ferrule.

In some embodiments, the combination also includes a pair of guide pin stops within the central opening and engageable with a rear portion of the guide pins of the fiber optic ferrule.

In some embodiments, the spring mechanism is under greater compression when the rear stop surfaces of the holder extensions are forward of the ferrule stop surfaces on the fiber optic ferrule than when the rear stop surfaces of the holder extensions are engaged with the ferrule stop surfaces.

In some embodiments, the fiber optic ferrules are miniature MT ferrules.

In yet other embodiments, the ferrule holder includes a fiber slot through which a plurality of optical fibers are disposed within the central opening.

In some embodiments, the plurality of optical fibers are in the form of an optical fiber ribbon.

In some embodiments, the spring mechanism is formed by a spring around each of the guide pins, each of the springs being positioned rearward of the fiber optic ferrules.

In some embodiments, the fiber optic ferrule has an end face that is angled polished.

In some embodiments, the guide pins move relative to the fiber optic ferrule during insertion and removal of the fiber optic ferrule from a receptacle.

In some embodiments, each of the first holder extension and the second holder extensions further comprises a head portion having the rear stop surface, wherein the head portion of each the first holder extension and the second holder extension functions to align the fiber optic ferrule with a receptacle.

In some embodiments, the fiber optic ferrule includes a pair of guide-pin bores to longitudinally receive respective ones of the pair of guide pins, a front end of each guide pin in the pair of guide pins partially extending outward and away from an end face of the fiber optic ferrule in an unmated state of the fiber optic ferrule, and the front end extends further outward from the end face in a mated state of the fiber optic ferrule inside the receptacle than in the unmated state of the fiber optic ferrule.

In some embodiments, the spring mechanism is under a maximum compression when in the mated state and is under a partial compression in the unmated state, the partial compression being less than the maximum compression.

In yet another aspect, there is a fiber optic ferrule holder comprising a body with a first side, a second side opposite the first side, a top side, and a bottom side opposite the top side, a central opening in the body defined at least in part by the first side, the second side, the top side, and the bottom side; and a first holder extension extending longitudinally and forward of first side and a second holder extension extending longitudinally and forward of second side, each of the first holder extension and the second holder extension including a rear stop surface configured to engage a respective ferrule stop surface on a fiber optic ferrule.

In some embodiments, there is a pair of guide pin stops within the central opening and engageable with the guide pins of the fiber optic ferrule.

In some embodiments, each of the first holder extension and the second holder extensions further comprises a head portion having the rear stop surface, wherein the head portion of each the first holder extension and the second holder extension functions to align the fiber optic ferrule with a receptacle.

It is to be understood that both the foregoing general description and the following detailed description of the present embodiments of the invention are intended to provide an overview or framework for understanding the nature and character of the invention as it is claimed. The accompanying drawings are included to provide a further understanding of the invention, and are incorporated into and constitute a part of this specification. The drawings illustrate various embodiments of the invention and, together with the description, serve to explain the principles and operations of the invention.

### BRIEF DESCRIPTION OF THE DRAWINGS

Fig. 1 is a perspective view of one embodiment of an adapter, fiber optic ferrule holders for bare fiber optic ferrules, and fiber optic connectors according to the present invention;
Fig. 2 is an exploded, perspective view of the adapter, bare fiber optic ferrules, fiber optic ferrule holders, and fiber optic connectors of Fig. 1;
Fig. 3 is a top perspective view of one embodiment of a bare fiber optic ferrule without the optical fibers according to the present invention;
Fig. 4 is front elevational view of the fiber optic ferrule in Fig. 3;
Fig. 5 is a rear elevational view of the fiber optic ferrule in Fig. 3;
Fig. 6 is a front perspective view of one embodiment of a bare fiber optic ferrule and fiber optic ferrule holder according to the present invention;
Fig. 7 is a rear perspective view of the bare fiber optic ferrule and fiber optic ferrule holder in Fig. 6;
Fig. 8 is front elevational view of the fiber optic ferrule holder in Fig. 6;
Fig. 9 is a rear elevational view of the fiber optic ferrule holder in Fig. 6;
Fig. 9A is a rear elevational view of another embodiment of a fiber optic ferrule holder according to the present invention;
Fig. 10 is top elevational view of the fiber optic ferrule holder in Fig. 6 in an uncompressed state;
Fig. 11 is a partial cross section perspective view of the fiber optic ferrule and fiber optic ferrule holder of Fig. 6;
Fig. 12 is a top elevational view of the fiber optic ferrule holder and fiber optic ferrule of Fig. 6 in a compressed state;
Fig. 13 is a top elevational view of the fiber optic ferrule and a partial cross section of the fiber optic ferrule holder of Fig. 12:
   Fig. 14 is a bottom plan view of the fiber optic ferrule and the fiber optic ferrule holder before being inserted into the adapter;
   Fig. 15 is a perspective view of the fiber optic ferrule and the fiber optic ferrule holder of Fig. 14;
   Fig. 16 is perspective view of the adapter in Fig. 1 with the triggers separated therefrom;
   Fig. 17 is a front elevation view of the adapter from the ferrule side;
   Fig. 18 is a front elevation view of the adapter from the fiber optic connector side;
   Fig. 19 is a perspective view of a trigger used with the adapter in Fig. 1;
   Fig. 20 is a perspective view from underneath the trigger in Fig. 19;
   Fig. 21 is a cross section of a partial view of the adapter and trigger;
   Fig. 21A is an enlarged view of a portion of the adapter and trigger in Fig. 21;
   Fig. 22 is a perspective view of a cross-section of the bottom of the adapter;
   Fig. 23 is a perspective view of a partial cross-section of the adapter showing the positioning of the trigger legs;
   Fig. 24 is a perspective view of the fiber optic ferrule and the fiber optic ferrule holder engaging the trigger of the adapter;
   Fig. 25 is a cross-sectional view of the fiber optic ferrule and the fiber optic ferrule holder in Fig. 20;

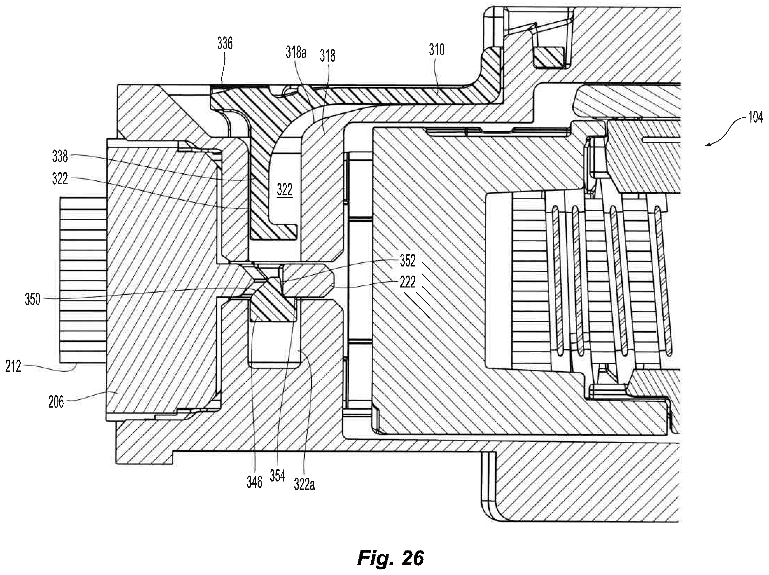

   Fig. 26 is a cross-sectional view through the adapter as well as the fiber optic connector and the bare fiber optic ferrule in Fig. 1;
   Fig. 27 is a cross section of a portion of the adapter showing the trigger legs in the columns;
   Fig. 28 is a cross section of the portion of the adapter in Fig. 23, but with the trigger legs farther in the leg space of the columns;
   Fig. 29 is a perspective view of the trigger leg engaging the fiber optic ferrule holder;
   Fig. 30 is a cross section view of a portion of the adapter from the ferrule side;
   Fig. 31 is a side plan view of a cross section of the adapter showing the fiber optic ferrule and the fiber optic ferrule holder as they are just being inserted into the adapter;
   Fig. 32 is a side plan view of a cross section of the adapter showing the fiber optic ferrule and the fiber optic ferrule holder partially inserted into the adapter;
   Fig. 33 is a side plan view of a cross section of the adapter showing the fiber optic ferrule partially inserted into the adapter and the fiber optic ferrule holder and guide pins only partially inserted into the adapter;
   Fig. 34 is a perspective view of the fiber optic ferrule and the fiber optic ferrule holder (without the adapter) and the fiber optic ferrule holder fully engaged with the fiber optic ferrule;
   Fig. 35 is a side plan view of a cross section of the adapter showing the fiber optic ferrule and the fiber optic ferrule holder both fully inserted into the adapter;
   Fig. 36 is partial cross section of the fiber optic ferrule and the fiber optic ferrule holder fully inserted and a gap between the fiber optic ferrule and the fiber optic ferrule holder;
   Fig. 37 is a cross section of the adapter, the fiber optic ferrule, and the fiber optic ferrule holder with the fiber optic connector being inserted with the fiber optic ferrule and the fiber optic ferrule holder already seated in the adapter;
   Fig. 38 is cross section of the adapter, the fiber optic ferrule, and the fiber optic ferrule holder with the fiber optic connector engaging and slightly moving the fiber optic ferrule and the fiber optic ferrule holder to the right;
   Fig. 39 is a perspective view of the cross section of the adapter, the fiber optic ferrule, and the fiber optic ferrule holder with the fiber optic ferrule holder being removed from the adapter after the trigger has been activated to release the fiber optic ferrule holder;
   Fig. 40 illustrates that as the fiber optic ferrule holder is removed, the guide pins are retracted and the fiber optic ferrule holder begins to pull on the fiber optic ferrule;
   Fig. 41 illustrates that the fiber optic ferrule holder and the fiber optic ferrule are removed from the adapter or alternatively, they are being inserted into the adapter with the fiber optic connector already seated with the guide pins retracted; and
   Fig. 42 shows that the fiber optic ferrule is being inserted with the fiber optic connector previously seated and there being no guide pin stubbing since the guide pins are retracted until the end of the insertion process.

### DETAILED DESCRIPTION OF THE INVENTION

Reference will now be made in detail to the present preferred embodiment(s) of the invention, examples of which are illustrated in the accompanying drawings. Whenever possible, the same reference numerals will be used throughout the drawings to refer to the same or like parts.

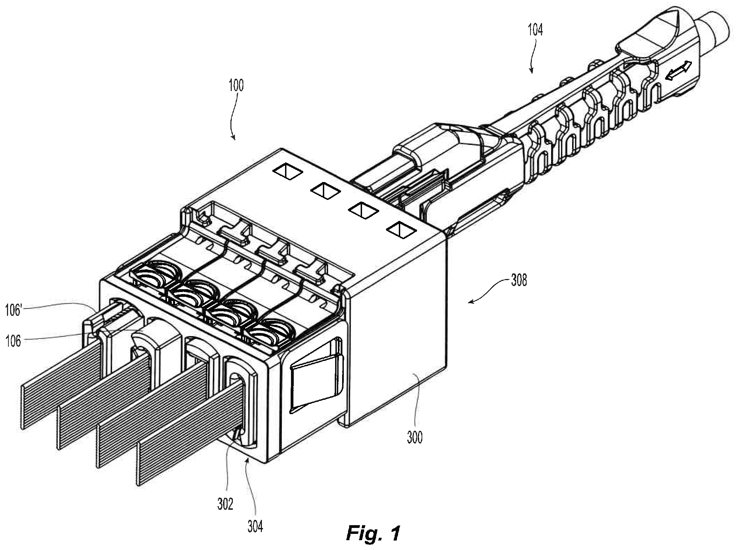

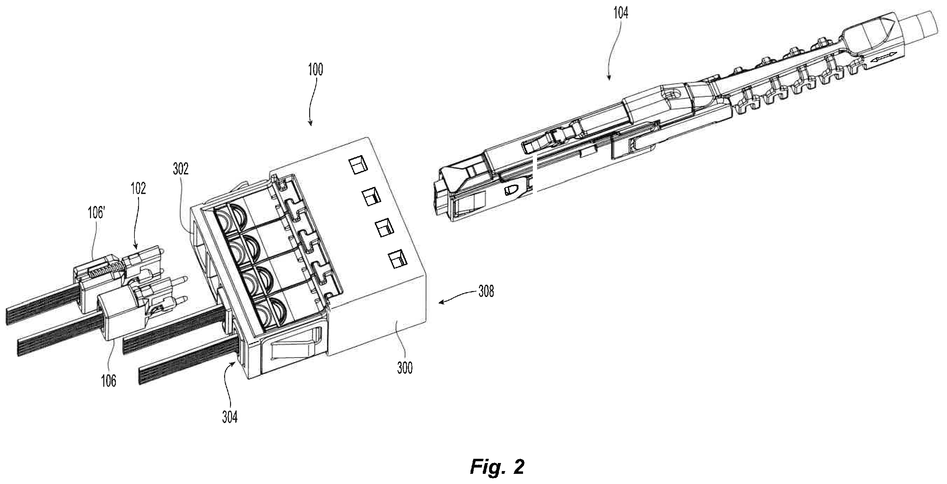

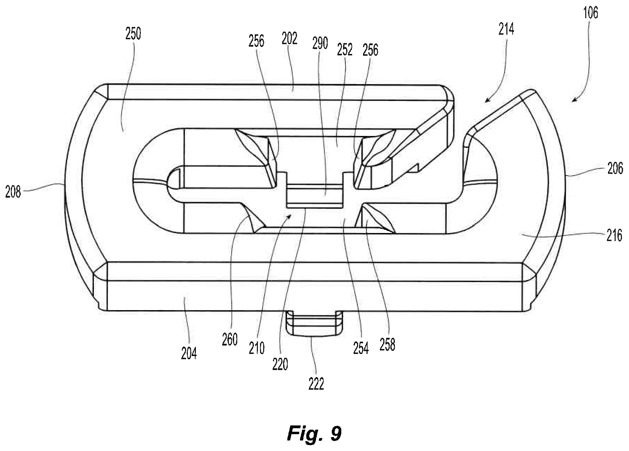

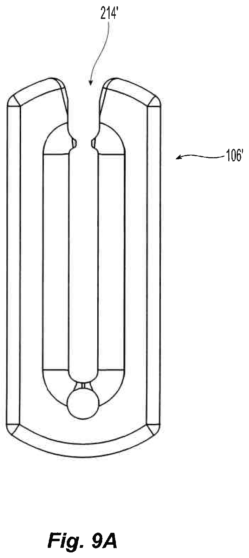

Illustrated in Figs. 1-2 is an adapter **100** that allows for mating bare multi-fiber fiber optic ferrules **102** to respective fiber optic connectors **104** (herein referred to interchangeably as "connectors"). The bare fiber optic ferrules **102** are the miniature MT ferrules discussed briefly above and in more detail below. The miniature MT ferrules **102** may be inserted into the adapter **100** with or without the assistance of a fiber optic ferrule holder **106**. However, it is more likely that a combination **108** of the fiber optic ferrules **102** and the fiber optic ferrule holders **106** is used. The fiber optic ferrules **102** will be discussed in detail first and then the adapter **100** will be discussed in detail. Figs. 1 and 2 also show an alternative embodiment of a fiber optic ferrule holder **106'**, a rear elevation view of which is shown in Fig. 9A.

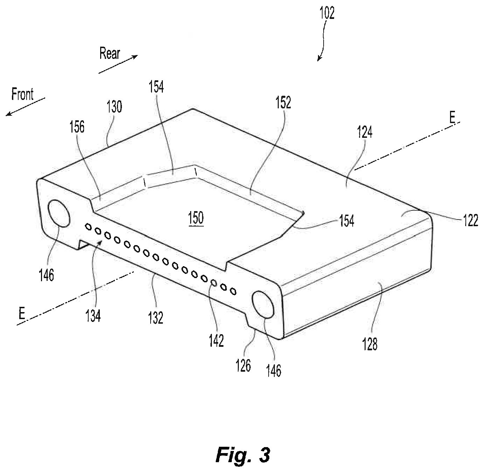

Applicant notes that the term "front" or "forward" means that direction where the fiber optic ferrule would be inserted into the adapter **100**. Therefore, in Figs. 1-2, the front is to the left side of the adapter **100** as the right side is typically installed within a panel or other receptacle, and therefore being in the rear or behind the panel. In addition, each component described herein has a front side and a rear side, as understood by the context in which the component is being described. See, e.g., Fig. 3 showing these areas for the fiber optic ferrule **102**.

Illustrated in Figs. 3-5 is a fiber optic ferrule **102** according to the present invention. The fiber optic ferrule **102** has a main body **122** having a top portion **124** and a bottom portion **126**. There is a first side portion **128** that extends between the top portion **124** and the bottom portion **126**. There is also a second side portion **130** extending between the top portion **124** and the bottom portion **126** on opposites sides of the main body **122**. The main body **122** also has an end face **132** at a front end **134** of the main body **122** and a rear face **136** at a rear end **138** of the main body **122**. The fiber optic ferrule **102** is significantly smaller than the conventional MT -ferrule and has typical dimensions of 1.25 mm height, 4 mm length (between the front end **134** and the rear end **138**), and a width of 6.4mm between the first side portion **128** and the second side portion **130**.

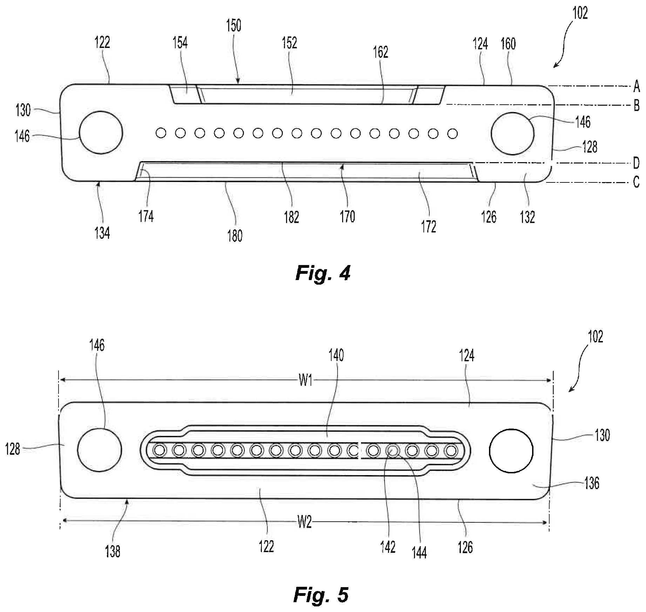

As seen in Fig. 5, the fiber optic ferrule **102** has a rear central opening **140** extending into the main body **122** from the rear face **136** and configured to receive at least three optical fibers (not shown). Typically, 8-16 optical fibers may be supported by the fiber optic ferrule **102**. The fiber optic ferrule **102** also has a plurality of fiber support structures **142** to support the optical fibers. The fiber support structures **142** are in communication with the rear central opening **140** and extending through the main body **122** to the end face **132**. Along the length of the fiber support structures **142** there may be chamfered portions **144** that assist in an insertion of the optical fibers into the fiber optic ferrule **102** without the skiving of the front ends of the optical fibers. The fiber support structures **142** may be fiber openings or fiber bores, but may alternatively be groove structures, or the combination or both. The main body **122** may also include two guide pin holes **146**, which extend between the end face **132** and the rear face **136**. The guide pin holes **146** provide a reference point with respect to the main body **122** and other structures to which the fiber optic ferrule **102** is mated. As noted below, the guide pin holes **146** are outside the area of cutouts **150**,**170** such that enough material in the main body **122** is present to allow for the guide pin holes **146**. The fiber optic ferrule **102** may also have guide pins **190**. The end face **132** may have a rectangular profile, although a trapezoidal profile (as shown) may also be provided as an alternative.

The top portion **124** has a top cut-out **150** that forms a first forward facing surface **152**. The first forward facing surface **152** is used as a ferrule stop surface in conjunction with a housing for a connector, e.g., an SFP/QSFP format fiber optic connector. However, as described in this disclosure, the bare fiber optic ferrule is not provided with a typical housing of a connector, and is present by itself or "bare." Instead, the fiber optic ferrule holder **106** provides support in handling of the bare fiber optic ferrule **102** when the latter is being advanced into the adapter **100**. Still, the first forward facing surface **152** plays a role in seating the bare fiber optic ferrule **102** inside the adapter **100**, as will be described in detail herein. There may also be a number of other surfaces formed by the top cut-out **150**. For example there is a second, slanted surface **154** on both sides of the top cut-out **150** that assist in the location of the fiber optic ferrule **102** in the housing for a connector. The second, slanted surfaces **154** assist in moving the fiber optic ferrule **102** in a side-to-side manner relative to the housing. There are also laterally facing surfaces **156** on each side that form the last part of the cut-out **150** and extend to the end face **132** from the second, slanted surfaces **154**. As illustrated in the figures, the top cut-out **150** does not extend all of the way to the rear end **138**, but stops short at the first forward facing surface **152**. However, a portion of the top cut-out **150** could extend all the way to the back of the fiber optic ferrule **102**. For example, a cutout in the shape of a "T" with a thin narrow section going all the way to the back would work as well, as long as there is at least one forward facing surface adjacent to such a variation of the top cut-out **150**. This applies to a bottom cut-out **170** as well, described below.

The top portion **124** has a first surface **160** that lies in a first plane **A** and the cut-out **150** forms a second surface **162** that lies in a second plane **B**. See Fig. 4. Planes **A** and **B** are preferably parallel to one another but off set, with plane **B** being closer to a longitudinal axis **E** passing through the center of the main body **122** and through the rear central opening **140** between the front end **134** and the rear end **138**. See also Fig. 5. It should also be noted that the cut-out **150** does not extend into the rear central opening **140** or the fiber support structures **142**.

Similarly, the bottom portion **124** has the bottom cut-out **170** that forms a second forward facing surface **172**. The second forward facing surface **172** is also used as a stop surface in conjunction with a housing for a connector. Again, in this respect, the bare fiber optic ferrule **102** is not provided with a typical housing for the fiber optic connector **104**. The bottom cut-out **170** also has two laterally facing surfaces **174** that form a portion thereof. The bottom cut-out **170** extends from the end face **132** towards the rear end **138**, but does not reach the rear end **138**. It may reach the same distance toward the rear end **138** from the end face **132** as does the top cut-out **150**, but it may stop short of or beyond where the top cut-out **150** stops at forward facing surface **152**.

The bottom portion **124** has a first surface **180** that lies in a third plane **C** and the bottom cut-out **170** forms a fourth surface **182** that lies in a fourth plane **D**. See Figs. 4 and 5. The planes **C** and **D** are preferably parallel to one another but off set, with plane **D** being closer to the longitudinal axis **E** passing through the center of the main body **122** and through the rear central opening **140** between the front end **134** and the rear end **138**. It should also be noted that the bottom cut-out **170** does not extend into the rear central opening **140** or the fiber support structures **142**.

Returning to the main body **122**, there is the first side portion **128** that extends between the top portion **124** and the bottom portion **126**. There is also the second side portion **130** extending between the top portion **124** and the bottom portion **126** on opposites sides of the main body **122**. The first side portion **128** and the second side portion **130** are smooth between the front end **134** and the rear end **138**. Additionally, there is no shoulder with fiber optic ferrule **102** making the profile from the back to the front the same as the front to the back - and also the same at the end face **132** and the rear face **136**. This is in contrast with the traditional MT ferrule, which is significantly larger, and has a shoulder to seat the ferrule inside a housing of a connector. That is, the fiber optic ferrule **102** is shoulder-less. The term shoulder-less referring to a lack of any protrusions or other features on the first side portion **128** and the second side portion **130** that may be used to engage the fiber optic ferrule **102** with a receptacle or an adapter. There are also no sharp edges along the length of the multi-fiber fiber optic ferrule **102** at the junction of the side portions **128**,**130** to the top and bottom portions **124**,**126**. See, e.g., Figs. 3 and 4. It should also be noted that the top portion **124** may be wider than the bottom portion. That is, the distance across the top portion **124** may be greater than the distance across the bottom portion **126** between the side portions. That is, **W1** may be greater that **W2** as illustrated in Fig. 5. Alternatively, **W1** equals **W2**.

The end face **132** may be angle-polished (i.e., at an angle relative to the rear face **136**). Alternatively, the end-face **132** may be flat polished. The top cut-out **150** may have a different width than the bottom cut-out **170**. This may act as a polarity indication and/or may cause the fiber optic ferrule **102** to be oriented in a specific direction when received inside a receptacle or an adapter for mating with another ferrule. Alternatively, the top cut-out **150** may have a same width as the bottom cut-out **170**.

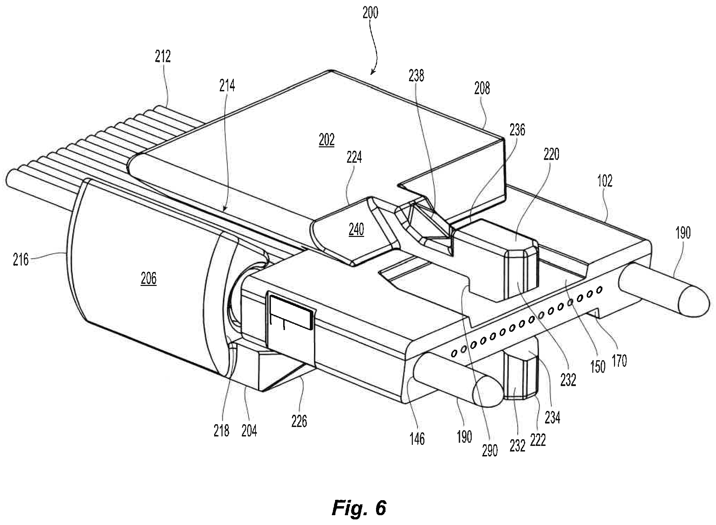

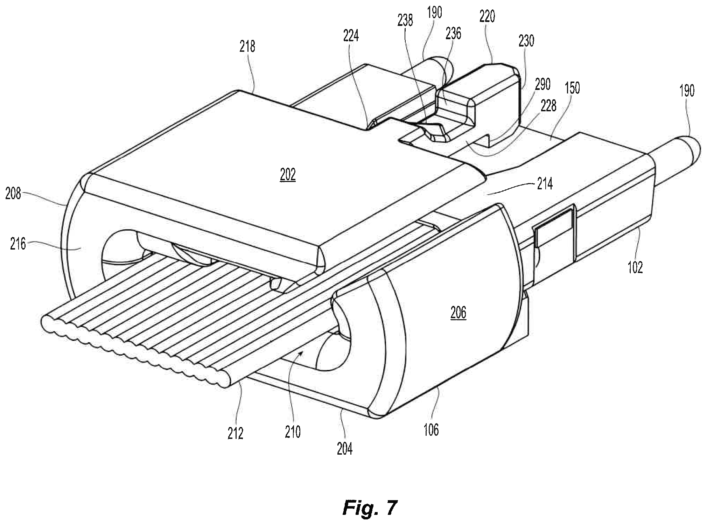

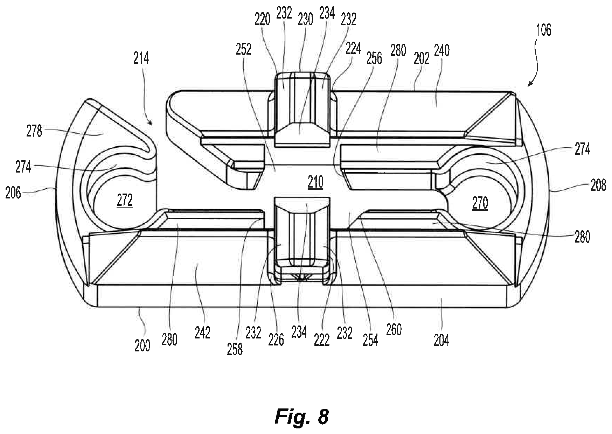

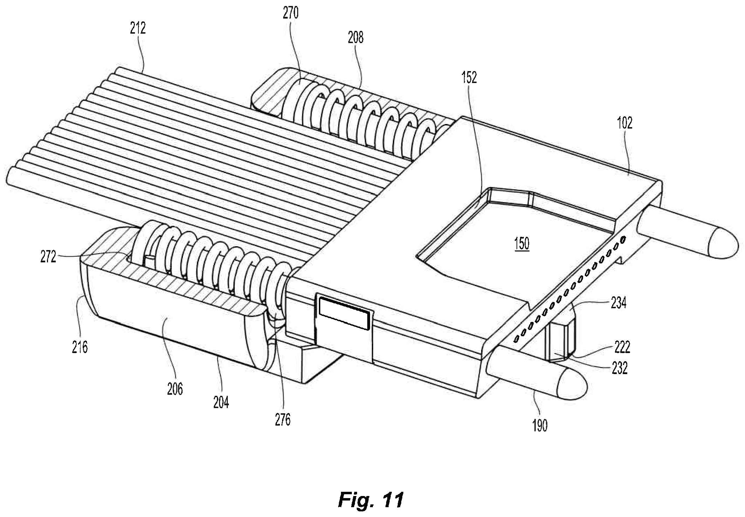

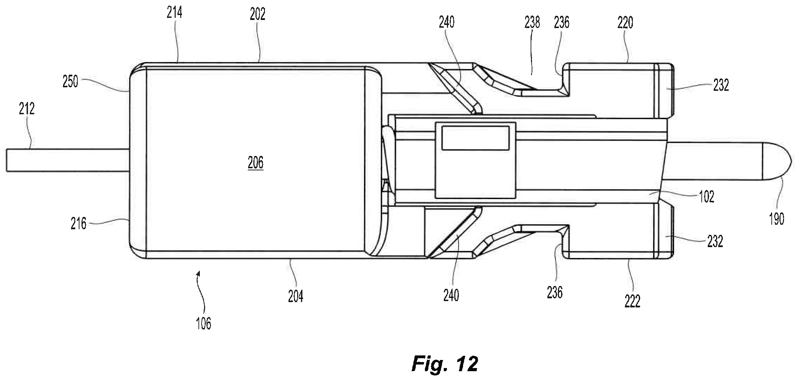

Turning now to Figs. 6-13, there is a fiber optic ferrule holder **106** that is used with the fiber optic ferrule **102** and the adapter **100**. Generally, the fiber optic ferrule holder **106** makes it easier to handle the bare fiber optic ferrule **102**, especially during insertion and removal into or from the adapter **100**. As discussed in more detail below, the fiber optic ferrule holder **106** may take various forms, e.g., the fiber optic ferrule holder **106'** in Figs. 1, 2, and 9A. The fiber optic ferrule holder **106** has a body **200** with a first side **202**, a second side **204** opposite the first side **202**, a top side **206**, and a bottom side **208** opposite the top side **206.** The top side **206** and the bottom side **208** are preferably curved, with the curvature extending the farthest away from the body **200** approximately half way between the first side **202** and the second side **204**. See Figs. 8 and 9. The body **200** also has a central opening **210** defined at least in part by the first side **202**, the second side **204**, the top side **206**, and the bottom side **208**. The central opening **210** receives the optical fibers **212** that are secured within the fiber optic ferrule **102**. See Figs. 7 and 11. The optical fibers **212** may be in a ribbon format or loose optical fibers.

The fiber optic ferrule holder **106** has a slot **214** extending longitudinally from a back end **216** of the fiber optic ferrule holder **106** to a front end **218** of the central opening **210**. See Figs. 7-9. As seen, the location of the slot **214** is about where the first side **202** meets with the top side **206**. However, the slot **214** could be located in other places around and on the body **200** and still fall within the scope of the present invention. See also Fig. 9A. Preferably, the slot **214** is dimensioned so that it is larger than the diameter of an optical fiber **212.**

Extending longitudinally from the first side **202** and the second side **204** are holder extensions **220**,**222**. The first holder extension **220** extends from the front **224** of the first side **202** and the second holder extension **222** extends from the front **226** of the second side **204**. Each of the first holder extension **220** and the second holder extension **222** are mirror images of each other and therefore only the first holder extension **220** will be discussed. The discussion will also apply to the second holder extension **222**.

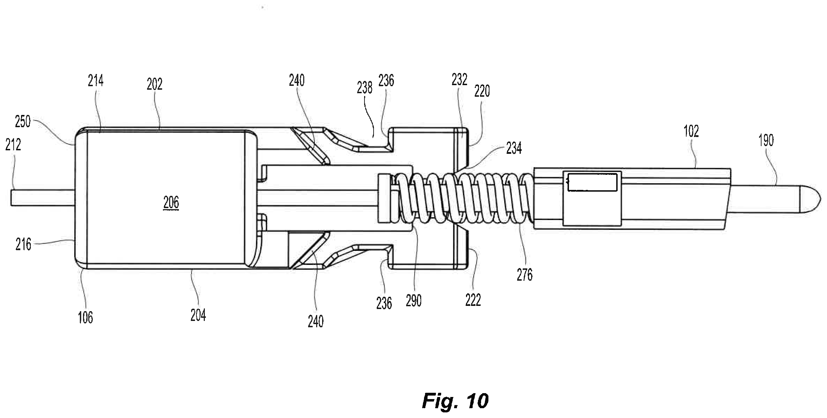

The first holder extension **220** has a main arm **228** with a head portion **230**, the head portion **230** having opposing chamfered side surfaces **232** that generally face forward. These chamfered side surfaces **232** assist in aligning the fiber optic ferrule holder **106** and the fiber optic ferrule **102** with the adapter **100**. See Figs. 8, 25, 32, 35, and 39 and discussion below. The holder extensions **220**,**222** also each have a chamfered surface **234** that face each other and assist in spreading the holder extensions **220**,**222** away from each other when the fiber optic ferrule holder **106** is installed on the fiber optic ferrule **102**. See Figs. 6 and 10 in particular. Moving from the head portion **230** backwards toward the first side **202**, there is a ramp stop surface **236** on the back of the head portion **230** that faces toward the first side **202** and engages the adapter **100**. Also between the ramp stop surface **236** and the first side **202** is a groove **238** that receives a portion of the adapter **100**. This combination is described in detail below.

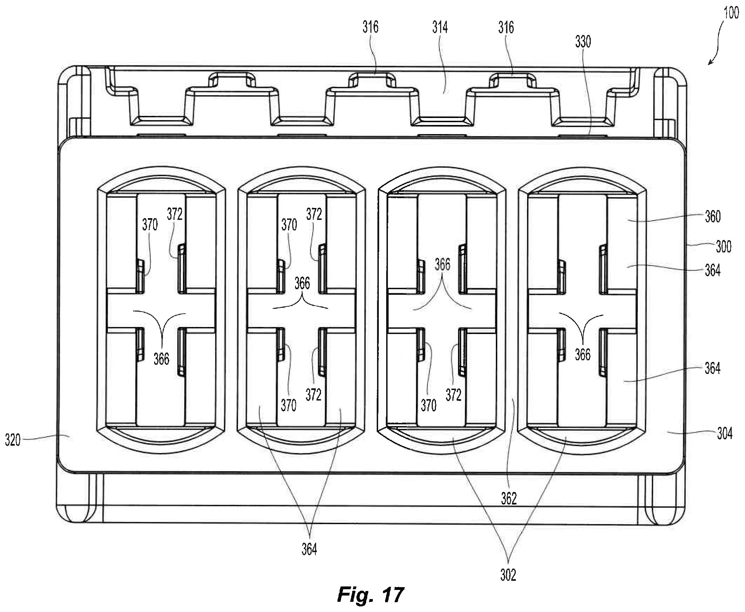

There is another chamfered surface that further assists the fiber optic ferrule holder **106** with the fiber optic ferrule **102** to be installed in the adapter **100**. That is, the first side **202** and the second side **204** have a chamfered surface **240**,**242**, respectively, that extend from the front thereof. The chamfered surface **240** extends from the front **224** of the first side **202**, while the chamfered surface **242** extends from the front **226** of the second side **204**. The chamfered surfaces **240**,**242** assist in aligning the fiber optic ferrule holder **106** and the fiber optic ferrule **102** with the plurality of ferrule-side openings **302** in the adapter **100**. See, e.g., Fig. 17 and the discussion below.

Turning to Figs. 8 and 9, the fiber optic ferrule holder **106** has features that assist in the insertion and removal of the fiber optic ferrule **102** in the adapter **100**. The back end **216** of the fiber optic ferrule holder **106** has a rear facing surface **250** that also functions as a rear push surface and allows the installer to push on the rear facing surface **250** to install the fiber optic ferrule **102**. Best seen in Fig. 9 are two internal grooves **252**,**254**. The first internal groove **252** is in the first side **202** (top side in Fig. 9) and has two walls **256** that are perpendicular to the central opening **210**. The second internal groove **254** is on the second side **204** and has one straight wall **258** that is adjacent to the slot **214**. The second internal groove **254** has a second slanted/angled wall **260**, i.e., not perpendicular to the central opening **210**. This slanted wall **260** assists in inserting the optical fibers **212** into the central opening **210**, especially when the optical fibers **212** are in a ribbon form. If the optical fibers **212** being inserted make contact with the slanted wall **260**, the optical fibers **212** will ride up the slanted wall **260** and into the central opening **210** toward the bottom side **208**, and not get stub or get stuck in the second internal groove **254**. The two internal grooves **252**,**254** assist in managing the optical fibers **212** within the fiber optic ferrule holder **106**.

The fiber optic ferrule holder **106** has two guide pins stops **270,272** that are within the central opening **210**. The guide pins stops **270,272** are on either side of the central opening **210** and at the end of partial cylinders **274**, which assist in containing springs **276** that surround the guide pins **190**. The springs **276** are positioned rearward of the fiber optic ferrule **102**. Although the figures show compression coil springs, it would also be possible to use a metal leaf spring or plastic beam to apply a force to the ferrule. See, e.g., Fig. 10. Ends of the guide pins **190** may engage the guide pin stops **270**,**272**. The fiber optic ferrule holder **106** also has forward facing surfaces **278**. However, in front of the forward facing surfaces **278** are float stops **280** that engage the fiber optic ferrule **102** during the insertion of the fiber optic ferrule **102** in the adapter **100**.

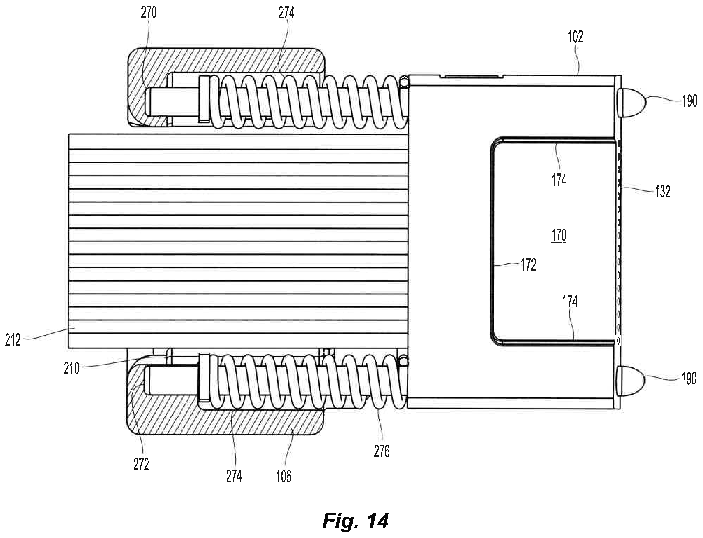

Finally, with respect to the fiber optic ferrule holder **106** there is a rear facing stop surface **290** on each of the holder extensions **220**,**222**. See, e.g., Fig. 9. Each of the rear facing stop surfaces **290** are configured to engage the forward facing surfaces (ferrule stop surfaces) **152,172** of the top cut-out **150** and the bottom cut-out **170** of the fiber optic ferrule **102**, respectively. Thus, when one pulls on the fiber optic ferrule holder **106** (generally in a direction parallel to the longitudinal axis **E**), the holder extensions **220**,**222** move relative to the fiber optic ferrule **102** and the rear facing stop surfaces **290** engage the forward facing surfaces **152**,**172**, pulling the fiber optic ferrule **102** out of the adapter with the fiber optic ferrule holder **106**. In this state when the combination of the fiber optic ferrule **102** and the fiber optic ferrule holder **106** is disengaged from the adapter **100**, or is free, the guide pins **190** are only slightly protruding past the end face **132**, see Fig 14. This moveable positioning of the guide pins **190** with only a slight protrusion when the bare fiber optic ferrule **102** is not fully seated inside the adapter **100** helps with avoiding pin stubbing, especially when the fiber optic connector **104** with its own fiber optic ferrule is already present inside the adapter **100**. The combination of the bare fiber optic ferrule **102** and the fiber optic ferrule holder **106** stays together due to the engagement of the holder extensions **220**,**222** with the respective cutouts **150**,**170**. The holder extensions **220**,**222** are generally made of plastic material and are biased to be in contact with the fiber optic ferrule **102**, e.g., at the top cut-out **150** and the bottom cut-out **170**, respectively. The fiber optic ferrule **102** does not slide back into the central opening **210** due to the presence of the guide pins **190** and the springs **276**. Although the figures show the guide pins **190** present in the fiber optic ferrule holder **106**, the fiber optic ferrule holder **106** could also operate without the guide pins in which case the mating ferrule would be male with guide pins.

Turning briefly to Fig. 9A again, there is an alternative embodiment of a fiber optic ferrule holder **106'** that has a slot **214'** along the top (or bottom) side **206'**. There are still the other features that are present in the first embodiment of fiber optic ferrule holder **106.**

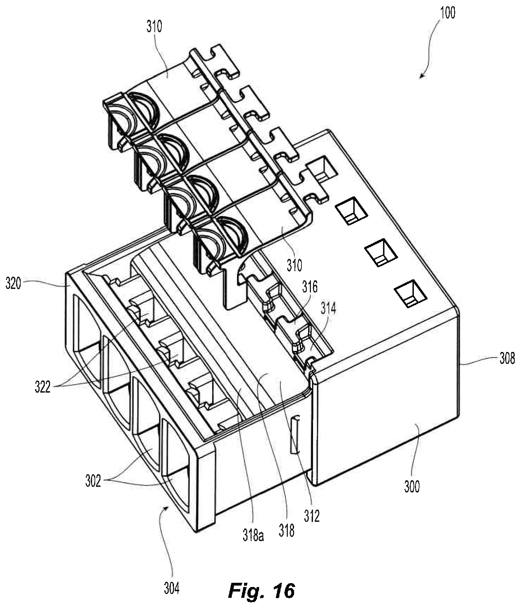

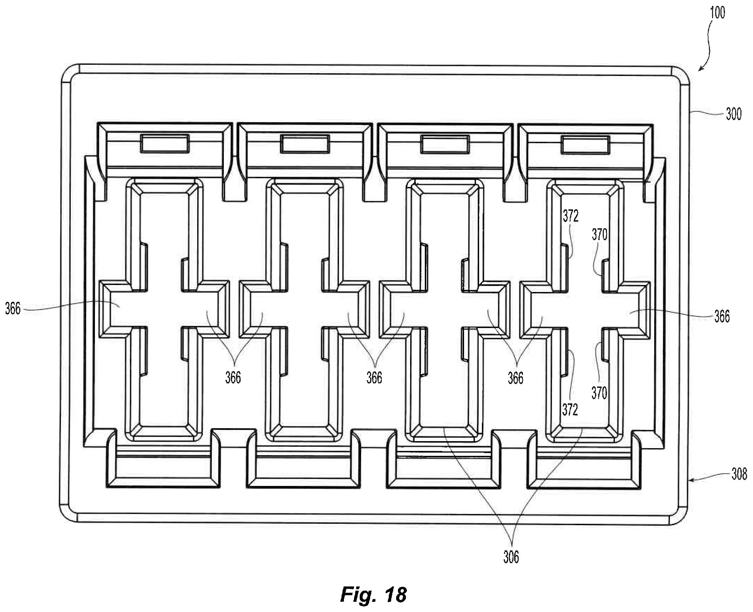

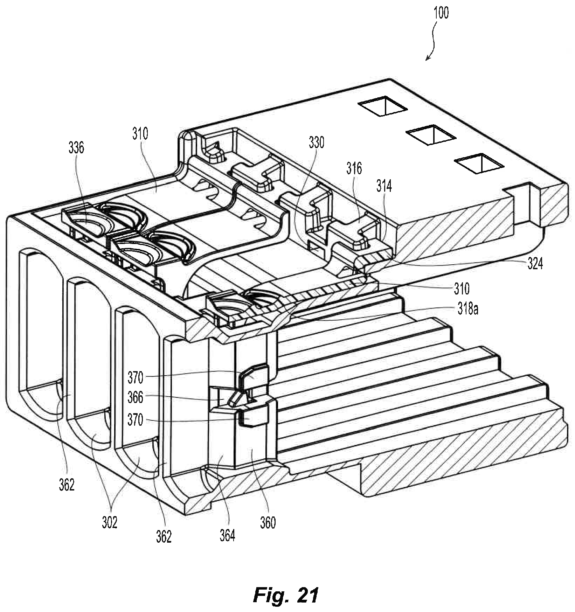

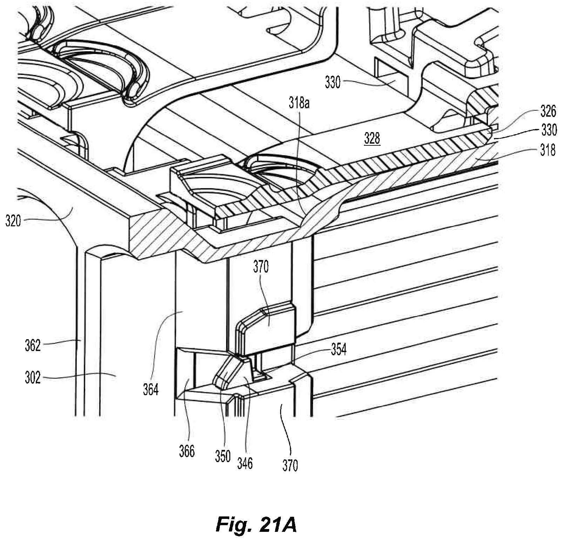

Turning to the adapter **100** illustrated in Figs. 16 - 23, the adapter **100** has a main body **300** with at least one ferrule-side opening **302** on a ferrule side **304** to receive a plurality of fiber optic ferrules **102**. See Fig. 17. The adapter **100** as shown is a unitary molded or is a single-piece adapter. However, a two-piece adapter may be molded and the two pieces may be joined together to assemble the adapter **100**. While there are a number of ferrule-side openings **302** illustrated in the figures, there may be more or fewer. The main body **300** also has a plurality of connector side openings **306** on a connector side **308** to receive fiber optic connectors **104**. See Fig. 18; see also Figs. 1 and 2. Again, there could be more or fewer connector side openings **306** - should be the same number on both sides of the adapter **100**. Triggers **310** are attached to the adapter **100** on the ferrule side **304**. Fig. 16, 19, and 20. The triggers **310**, as discussed below, are used to keep the bare fiber optic ferrules **102** in the adapter **100** until they need to be removed. As illustrated in Fig. 16, the plurality of triggers **310** are attached to the adapter **100** on a top side **312** (naming convention only). The adapter **100** has a plurality of tab receptacles **314** with trigger partitions **316** separating each of the plurality of tab receptacles **314**. The adapter **100** also has a trigger support area **318** between the tab receptacles **314** and a front face **320** of the ferrule side **304**. The trigger support area **318** has a curved surface **318a**. See Figs. 21 and 21A. As discussed below, the adapter **100** has trigger receptacle openings **322** that are disposed between the trigger support area **318** and the front face **320**.

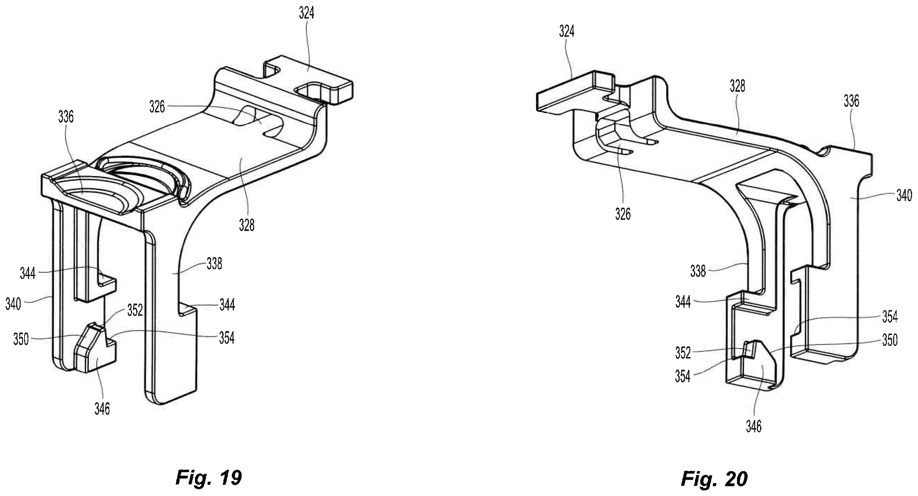

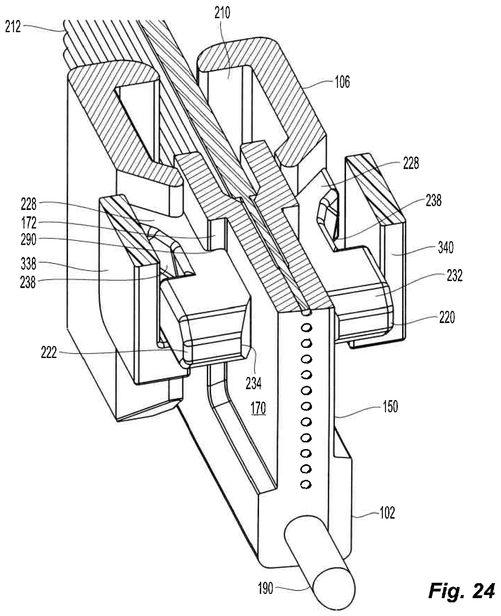

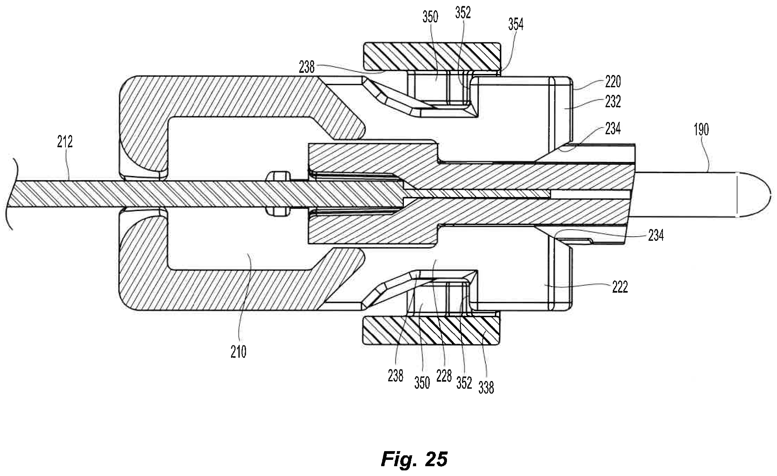

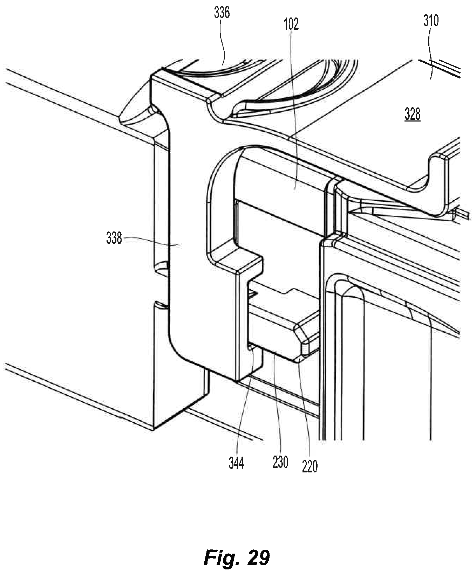

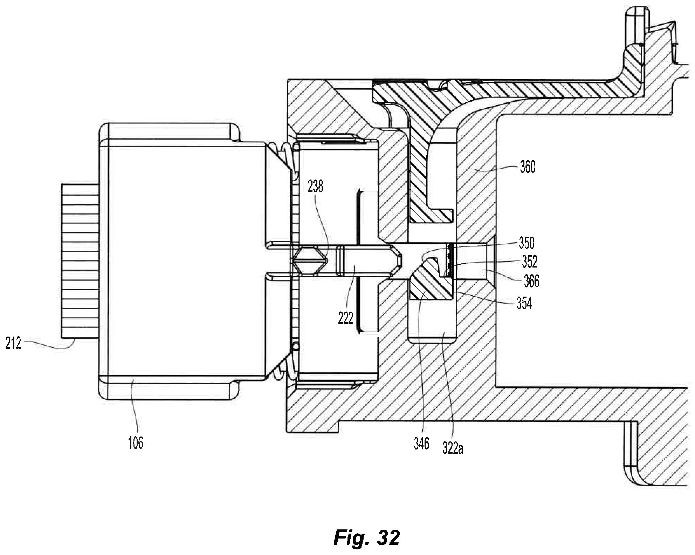

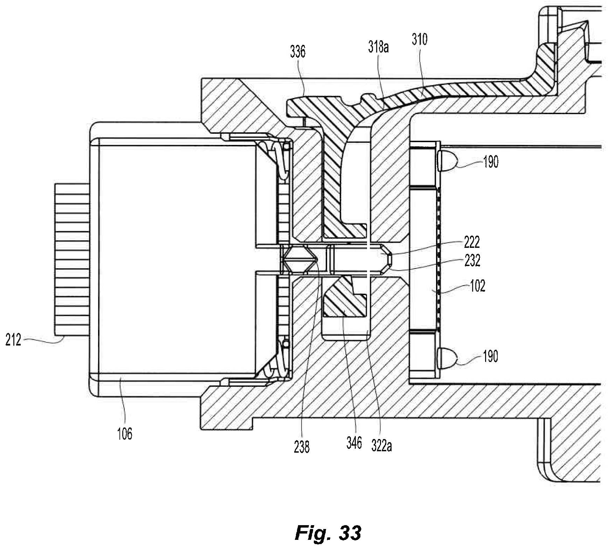

The triggers **310** are further illustrated in Figs. 19 and 20. The triggers **310** have a tab **324** that are inserted into the tab receptacles **314** of the adapter **100**. Below the tab **324** is a lock latch **326** that extends from a flat body **328** of the trigger **310**. The lock latch **326** is inserted into a lock receptacle **330** below the tab receptacles **314** of the adapter **100.** See Fig. 21 and 21A. The combination of the tab **324** and the lock latch **326** keep the triggers **310** from inadvertently disassociating from the adapter **100**. The triggers **310** also have a trigger pad **336** that is used by an operator to release the fiber optic ferrules **102** from the adapter **100** when the time is right. Note that the trigger pad **336** is above the trigger support area **318** and the curved surface **318a** in particular and the triggers **310** are flexible. Thus, with the tab **324** and the lock latch **326** secured to the adapter **100**, pushing on the trigger pad **336** causes the trigger **310** to elastically bend around the curved surface **318a**. As a result, the trigger legs **338**,**340** move relative to the adapter **100**. The movement of the trigger legs **338**,**340** causes the adapter **100** to either engage or disengage the fiber optic ferrule holder **106**. At the end of each of the trigger legs **338**,**340** are two inward structures. The first is an L-shaped projection **344** that provides stiffness to the trigger legs **338**, **340**. The L-shaped projections **344** also interact with the adapter **100** to assist in keeping the fiber optic ferrule **102** in position when mated with a fiber optic connector **104**. The second structure **346** has a trigger ramp **350**, a head stop surface **352**, and a vertical stop surface **354**. The trigger ramp **350**, as discussed in more detail below, makes contact with the head portion **230** of the holder extensions **220**,**222** as the fiber optic ferrule **102** is inserted into the adapter **100**. See Figs. 32 and 33. The head stop surface **352** engages a ramp stop surface **236** on the back of the head portion **230**. See Fig. 24 and 25. As a result, the fiber optic ferrule holder **106** is prevented from moving backward out of the adapter **100**. The second structure **346** and the vertical stop surface **354** are biased upward (due to the bending of the triggers **310**) and causes the trigger legs **338**,**340** to maintain contact with the holder extensions **220**,**222** and secure the fiber optic ferrule **102** within the adapter **100**. See Figs. 25 and 29.

It should be noted that any mating force (with a fiber optic connector **104** for example) on the fiber optic ferrule **102** is transmitted to fiber optic ferrule holder **106**, which in turn is transferred to the trigger legs **338**,**340** and the L-shaped projection **344,** which then engages the adapter **100**. See Figs. 24 and 25.

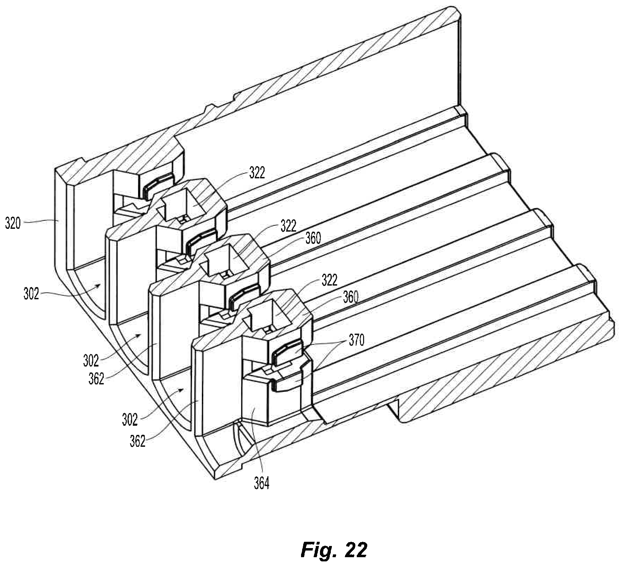

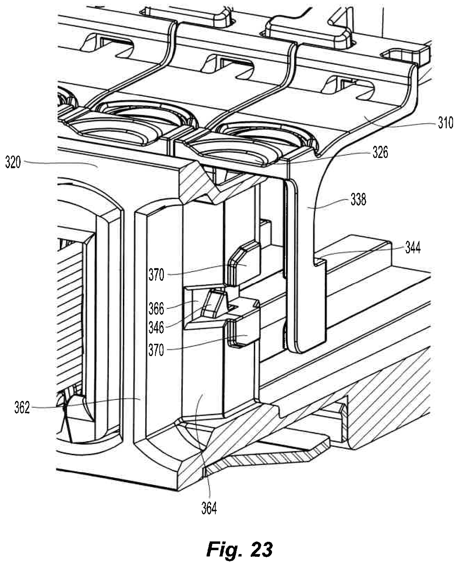

The trigger legs **338**,**340** are inserted into the trigger receptacle openings **322** in columns **360**, which are on each side of the ferrule-side openings **302**. See Figs. 21A and 22. The columns preferably extend from the top to the bottom of the adapter **100**. Preferably, there is a partition **362** that is associated with each of the columns **360**. The partitions **362** are illustrated as being integral with the columns **360**. However, the partitions **362** could be completely or only partially separate from the columns **360**. The partitions **362** provide a larger opening into the ferrule-side openings **302**. The size of the ferrule-side openings **302** is reduced by a chamfered surface **364** to guide the fiber optic ferrules **102** into the ferrule-side openings **302**. The chamfered surface **364** is provided on each of the columns **360** on opposing sides thereof. Thus, there are two sets of the chamfered surface **364** within each of the ferrule side openings **302**. As will be appreciated, since the trigger legs **338**,**340** are inserted into the trigger receptacle openings **322** and are positioned on each side of the fiber optic ferrule **102**, trigger legs **338**,**340** from adjacent triggers **310** are in the same trigger receptacle opening **322** in each column **360**. See, e.g., Fig. 23.

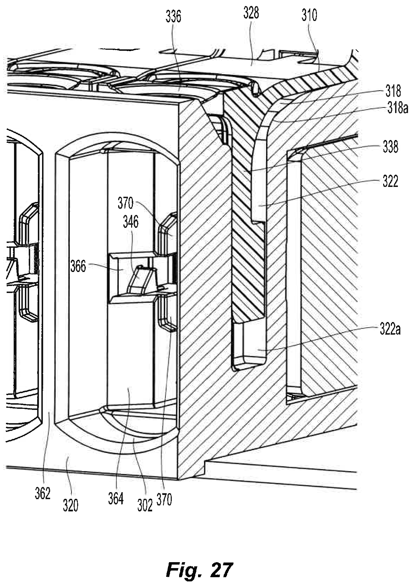

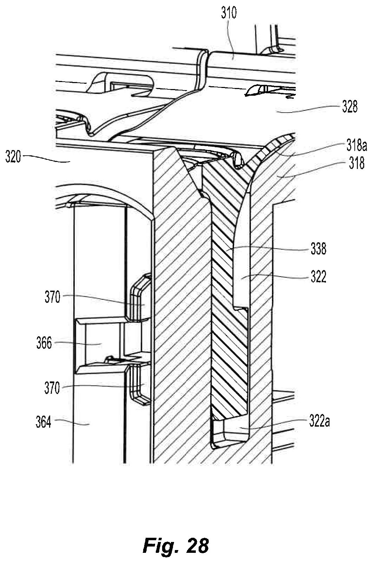

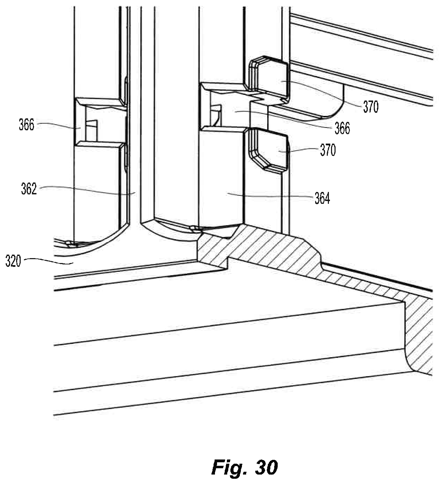

Each of the columns **360** have at least one holder extension groove **366** that extends longitudinally between the ferrule side **304** and the connector side **308** and allows for the second structure **346** (with the trigger ramp **350**, head stop surface **352**, and vertical stop surface **354**) to have access to the ferrule-side openings **302** from the trigger receptacle openings **322**. See, e.g., Figs. 21A, 22, 23, 27, 28, and 30. Since a holder extension groove **366** is needed on each side of the ferrule-side openings **302**, there are two of the holder extension grooves **366** in each of the columns **360** in the middle of the adapter **100**, but only one on those at the edges. See Figs. 17, 18, and 22.

On each of the columns **360** and on either side of the holder extension grooves **366** are ferrule stop pedestals **370**,**372**. See Figs. 17 - 23. The ferrule stop pedestals **370**,**372** are configured to fit within the cut-outs **150**,**175** and the fiber optic ferrule **102**. Additionally, the ferrule stop pedestals **370**,**372** are shaped to engage the surfaces **152,154** of the top cut-out **150** and surfaces **172** of the bottom cut-out **170** of the fiber optic ferrule **102**. However, the ferrule stop pedestals **370**,**372** may be of different sizes and shapes. For example, as is seen in Fig. 17, the ferrule stop pedestals **370** are different from the ferrule stop pedestals **372.** In this case, the sizes of the ferrule stop pedestals **370**,**372** mimic the sizes of the cut-outs **150**,**170** in the fiber optic ferrule **102**, which are different on the different sides thereof. Thus, the ferrule stop pedestals **370**,**372** may also provide a keying feature since the fiber optic ferrules **102** will only fit within the adapter **100** in one orientation. These structures not only help to align the fiber optic ferrule **102** within the adapter **100**, but as discussed below also assist with the engagement of the fiber optic ferrule **102** with the fiber optic connector **104** during mating.

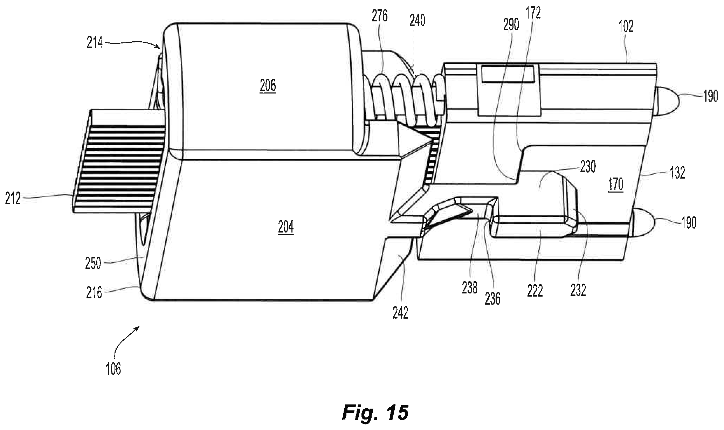

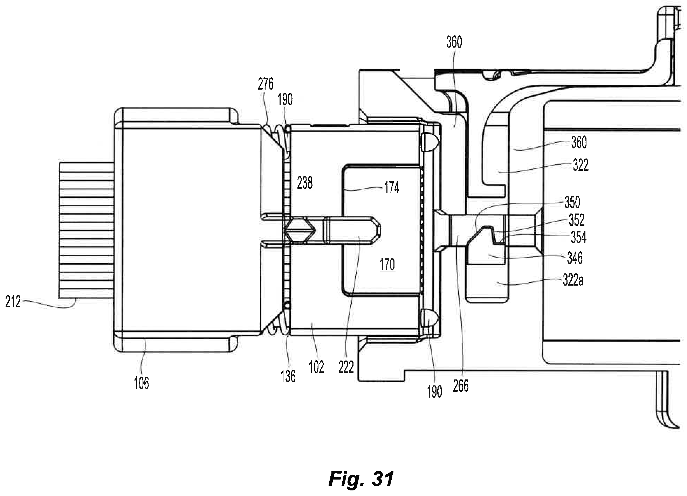

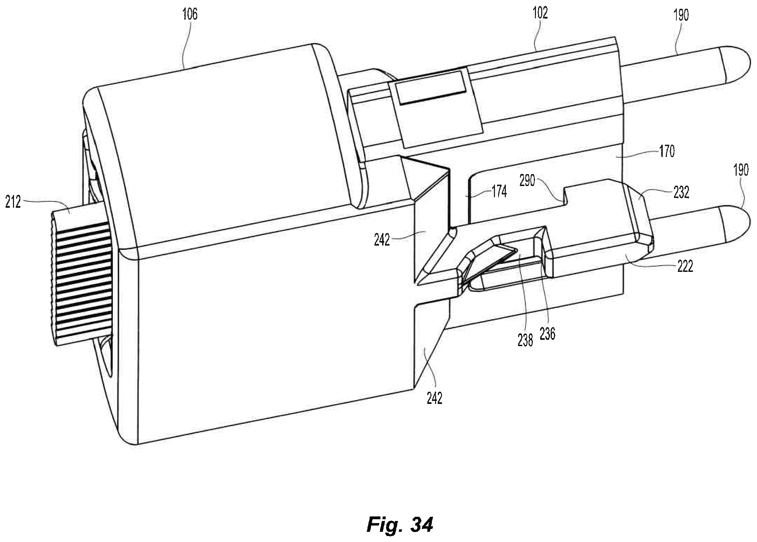

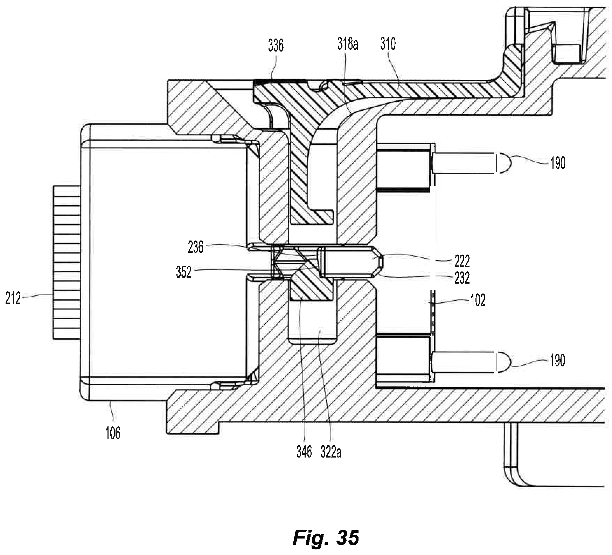

Now that all of the components have been discussed in detail, the insertion and/or removal of the fiber optic ferrule **102** and the fiber optic ferrule holder **106** in relation to the adapter **100** will be described. The initial condition of the fiber optic ferrule **102** and the fiber optic ferrule holder **106** are illustrated in Figs. 14 and 15. The fiber optic ferrule holder **106** has the guide pins **190** seated in the two guide pins stops **270,272**. The spring **276** around each of the guide pins **190** are in a generally relaxed state. Each spring **276** is positioned rearward or behind the rear face **136** of the bare fiber optic ferrule **102**. If the fiber optic ferrule holder **106** is moved forward relative to the fiber optic ferrule **102**, the guide pins **190** begin to emerge from the fiber optic ferrule **102** and the springs **276** begin to compress due to that relative motion. See Figs. 11 and 14. As the fiber optic ferrule holder **106** advances, the rear facing stop surfaces **290** engage the forward facing surfaces (ferrule stop surfaces) **152,172** of the fiber optic ferrule **102**. See Fig. 31. In Fig. 31, the fiber optic ferrule **102** is moving into the ferrule-side openings **302** on a ferrule side **304** of the adapter. Fig. 32 shows the next step as the combination of the fiber optic ferrule **102** and the fiber optic ferrule holder **106** moves farther into the adapter **100**. The head portion **230** of the holder extension **222** is moving into the holder extension groove **366** (on both sides of the fiber optic ferrule **102**). However, the holder extensions **220**,**222** have not yet encountered trigger ramp **350**, head stop surface **352**, and vertical stop surface **354**. Fig. 33 shows the engagement of the holder extension **222** with the trigger ramp **350**. That engagement causes the trigger **310** to bend and the trigger legs **338**,**340** (which carries the second structure **346**) to move downward towards the bottom **322a** of the trigger receptacle opening **322**. The movement of the trigger legs **338**,**340** occurs due to a downward pulling force on the second structure **346** as the engagement of the holder extensions **220**,**222** occurs with the trigger ramp **350** (which is the initial point of contact with the head portion **230**). The bare fiber optic ferrule **102** is advanced toward the connector side **308**. At this point in the insertion, the fiber optic ferrule **102** has begun to encounter the ferrule stop pedestals **370**,**372** inside the adapter **100**. This provides extra stability and positioning for the smaller fiber optic ferrule **102** within the adapter **100** and relative to the fiber optic connector **104**. It also causes the fiber optic ferrule **102** to stop moving forward, but the fiber optic ferrule holder **106** continues to move and the guide pins **190** start to emerge more from the fiber optic ferrule **102** (away from the end face **132**). See Figs. 34 and 35. As the guide pins **190** start to emerge even more from the fiber optic ferrule **102** as a result of the fiber optic ferrule holder **106** moving relative to the fiber optic ferrule **102**, the springs **276** become more and more compressed.

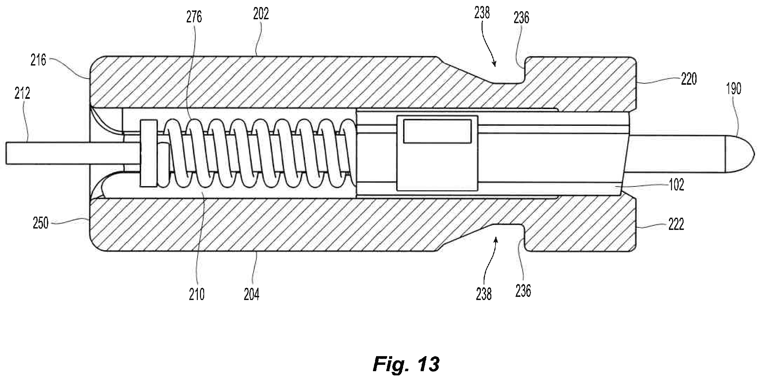

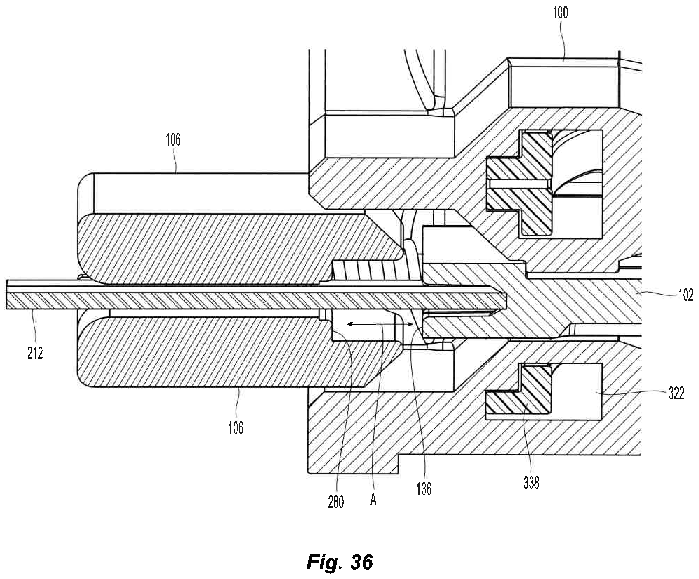

At this point, the head stop surface **352** of the trigger legs **338**,**340** engages the ramp stop surface **236** on the back of the head portion **230** of the respective holder extensions **220**,**222**. See also Figs. 13, 19, 24, 25, and 29. There is also a small amount of float (gap) of the fiber optic ferrule **102** within the fiber optic ferrule holder **106**. As illustrated in Fig. 36, the gap is illustrated as an arrow **A** between the rear face **136** of the fiber optic ferrule **102** and the float stops **280**.

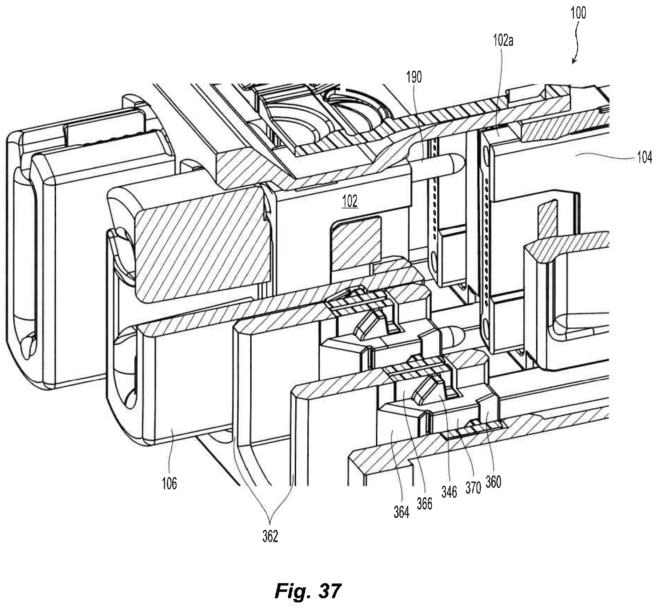

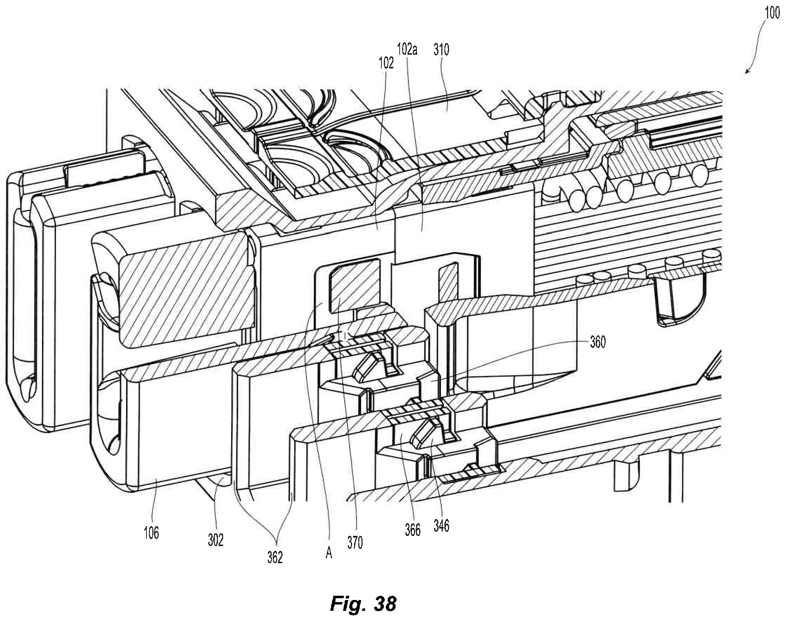

Figs. 37 - 38 illustrate the situation where a bare fiber optic ferrule **102** with a fiber optic ferrule holder **106** is already seated in the adapter **100**, and subsequently mates with the fiber optic ferrule **102** from the fiber optic connector **104**. The bare fiber optic ferrule **102** is engaged with the ferrule stop pedestals **370**,**372** and the head stop surface **352** is engaged with the ramp stop surface **236**. See Fig. 35. When the fiber optic ferrule **102a** from the fiber optic connector **104** makes contact with the bare fiber optic ferrule **102**, the bare fiber optic ferrule **102** moves rearwardly with respect to the adapter **100** and the fiber optic ferrule holder **106** - closing the gap between the rear face **136** of the bare fiber optic ferrule **102** and the float stops **280**. The bare fiber optic ferrule **102** also moves rearwardly from the ferrule stop pedestals **370**,**372**. The fiber optic ferrule holder **106** does not move due to the engagement of the head stop surface **352** and the ramp stop surface **236**. This situation allows for increased mating forces of up to about 20N.

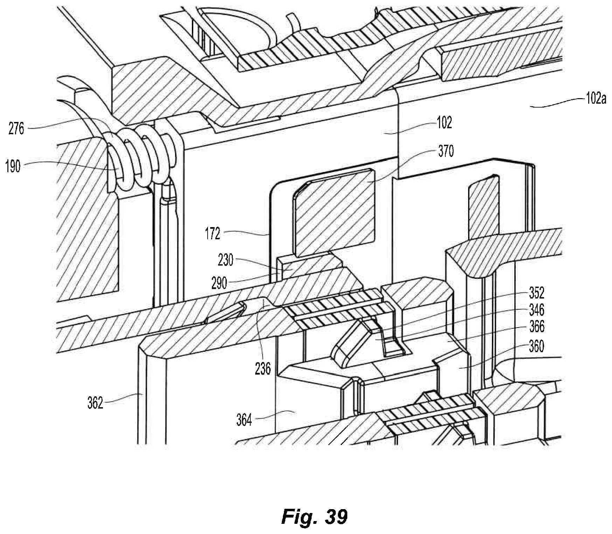

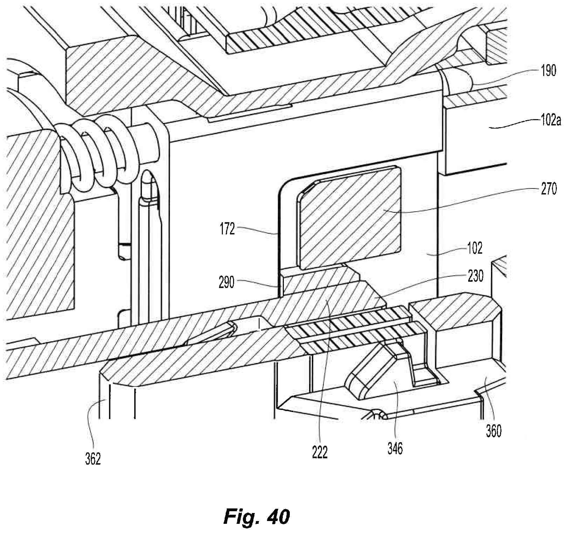

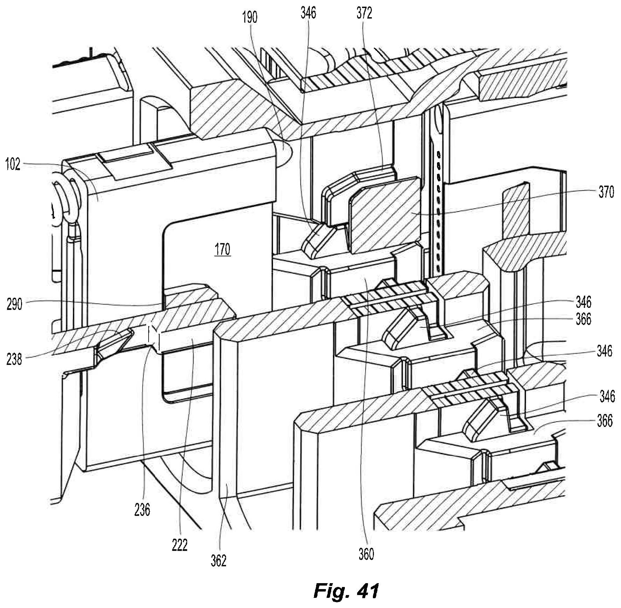

Figs. 39-41 illustrate the removal of the bare fiber optic ferrule **102** and the fiber optic ferrule holder **106** from the adapter **100**. In Fig. 39, the trigger pad **336** has been pressed moving the trigger legs downward and uncoupling the ramp stop surface **236** on the back of the head portion **230** from the head stop surface **352**. See also Fig. 35. Thus, the fiber optic ferrule holder **106** is now free from the adapter **100**, and moves rearwardly because of the tension in the guide pin springs **276**. The guide pins **190** will retract, at least partially from the fiber optic ferrule **102a** in the fiber optic connector **104**. Each of the rear facing stop surfaces **290** of the fiber optic ferrule holder **106** then engage the forward facing surfaces **152,172** on both sides of the fiber optic ferrule **102**. See Fig. 40 for one of the two sides. It should be noted that in Fig. 40, the tip of the guide pin **190** is still disposed within the guide pin hole of the fiber optic ferrule **102a** in the fiber optic connector **104**. One can then pull on the fiber optic ferrule holder **106**, which is still engaged to the fiber optic ferrule **102** (the forward facing surfaces or the ferrule stop surfaces **152,172**) by the rear facing stop surfaces **290.** Fig. 41 shows the further removal of the bare fiber optic ferrule **102** and the fiber optic ferrule holder **106** from the adapter **100**. Performing the steps in reverse would also allow for the bare fiber optic ferrule **102** and the fiber optic ferrule holder **106** to be mated to the fiber optic connector **104**.

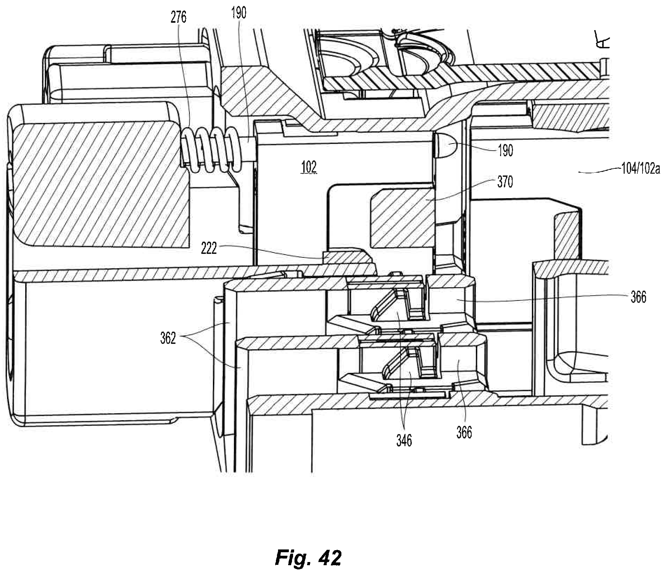

Figs. 41 and 42 can also explain the insertion of a bare fiber optic ferrule **102** and the fiber optic ferrule holder **106** into the adapter **100** when the fiber optic connector 104 is already seated in the adapter **100**. In Fig. 41, the fiber optic connector **104** is seated in the adapter **100**. The fiber optic ferrule **102** is coming from the left and has the guide pins **190** slightly protruding. If the guide pins **190** were fully protruding from the fiber optic ferrule **102**, they would have a greater chance of stubbing against the fiber optic connector **104**, for example, against the end face of the fiber optic ferrule 102a. However, as the fiber optic ferrule **102** is advanced and engages the ferrule stop pedestals **370**,**372**, the fiber optic ferrule **102** is aligned with the fiber optic connector **104** and prevents the stubbing of the guide pins **190**.

Turning to Fig. 42, it can be seen that fiber optic ferrule **102** is close to the fiber optic connector **104** and as the fiber optic ferrule holder **106** is advanced relative to the fiber optic ferrule **102**, the guide pins **190** would engage the fiber optic connector **104**. Even further advancement of the combination of the fiber optic ferrule **102** and the fiber optic ferrule holder **106** would cause the fiber optic ferrule holder **106** to engage the adapter and maintain the relationship with the fiber optic connector **104** to eventually be in the mated position with the fiber optic ferrule **102a**, as shown for example in Fig. 39.

It will be apparent to those skilled in the art that various modifications and variations can be made to the present invention without departing from the spirit and scope of the invention. Thus, it is intended that the present invention cover the modifications and variations of this invention provided they come within the scope of the appended claims and their equivalents.

## Claims

1. A combination of a fiber optic ferrule (102) and a fiber optic ferrule holder (106) comprising:
a fiber optic ferrule including a pair of guide pins (190) movable between a non-mating position and a mating position via a spring mechanism, the fiber optic ferrule including a top cut-out (150) on a top portion (124) and a bottom cut-out (170) on a bottom portion (126) of the fiber optic ferrule, each of the top cut-out and the bottom cut-out having with a ferrule stop surface (152, 172) associated therewith;
a ferrule holder having a body (200) with a first side (202), a second side (204) opposite the first side, a top side (206), and a bottom side (208) opposite the top side, a central opening (210) in the body defined at least in part by the first side, the second side, the top side, and the bottom side; and
a first holder extension (220) extending longitudinally and forward of the first side and a second holder (222) extension extending longitudinally and forward of the second side, each of the first holder extension and the second holder extension including a rear stop surface (290) configured to engage a respective ferrule stop surface on the fiber optic ferrule,
**characterized in that** the ferrule holder (106) includes a fiber slot (214, 214') through which a plurality of optical fibers (212) are disposed within the central opening (210), and
**in that** the slot (214) extends longitudinally from a back end (216) of the fiber optic ferrule holder (106) to a front end (218) of the central opening (210).

2. The combination according to claim 1, wherein a location of the slot (214) is about where the first side (202) meets with the top side (206).

3. The combination according to claim 1, wherein the slot (214') is along the top side or the bottom side (206').

4. The combination according to claim 1, **characterized in that** the ferrule holder (106) has a back end (216) with rear facing surface functions as a rear push surface, **in that** the ferrule holder has a first and a second internal groove (252, 254), **in that** the first internal groove (252) is in the first side (202) and has two walls (256) that are perpendicular to the central opening (210), **in that** the second internal groove (254) is on the second side (204) and has one straight wall (258) that is adjacent to the slot (214), and **in that** the second internal groove (254) has a second slanted/angled wall (260) being not perpendicular to the central opening (210) and assisting in inserting the optical fibers (212) into the central opening (210).

5. The combination according to claim 4, wherein, when the optical fibers (211) making contact with the slanted wall (260), the optical fibers are riding up the slanted wall (260) into the central opening (210) of the ferrule holder (106) forward the bottom side (208) and not getting stubbed or stuck in the second internal groove (254).

6. The combination according to claim 1, wherein the plurality of optical fibers (212) are in the form of an optical fiber ribbon.

7. The combination according to claim 1, wherein the guide pins (190) move relative to the fiber optic ferrule (102) during insertion and removal of the fiber optic ferrule from a receptacle.

8. The combination according to claim 1, wherein each of the first holder extension (220) and the second holder extension (222) further comprises a head portion (230) having the rear stop surface (290), wherein the head portion of each the first holder extension and the second holder extension functions to align the fiber optic ferrule (102) with a receptacle.

9. The combination according to claim 1, wherein, when pulling on the fiber optic ferrule holder (106), the first and second holder extension (220, 222) move relative to the fiber optic ferrule (102) and the rear facing stop surfaces (290) engage the forward facing surfaces (152, 172), pulling the fiber optic ferrule (102) out of the receptable with the fiber optic ferrule holder (106).

10. The combination according to claim 1, wherein the guide pins (190) move with the fiber optic ferrule holder (106).

11. The combination according to claim 1, wherein the ferrule holder (106) has a first surface (250) to push the fiber optic ferrule and a second surface (290) to engage a forward facing surface (152/172) to remove the fiber optic ferrule from the adapter.
